## Europäisches Patentamt
## European Patent Office
## Office européen des brevets

(19)

(11) Numéro de publication: **0 158 552**
**B1**

(12)
# FASCICULE DE BREVET EUROPÉEN

(45) Date de publication du fascicule du brevet:
**12.08.87**

(51) Int. Cl.⁴: **B 60 T 13/24**

(21) Numéro de dépôt: **85400483.5**

(22) Date de dépôt: **13.03.85**

(54) Servomoteur à dépression d'assistance au freinage.

(30) Priorité: **21.03.84 FR 8404388**

(43) Date de publication de la demande:
**16.10.85 Bulletin 85/42**

(45) Mention de la délivrance du brevet:
**12.08.87 Bulletin 87/33**

(84) Etats contractants désignés:
**BE DE GB IT NL SE**

(56) Documents cité:
**GB-A-2 032 549**
**GB-A-2 060 100**
**US-A-4 043 251**

(73) Titulaire: **BENDIX France, 126, rue de Stalingrad, F-93700 Drancy (FR)**

(72) Inventeur: **Carre, Jean Jacques, 59 Boulevard de l'Est, F-93340 Le Raincy (FR)**
Inventeur: **Thioux, Alain, 9 Allée des Bordes, F-94430 Chennevieres (FR)**

(74) Mandataire: **Le Moenner, Gabriel, SERVICE BREVETS BENDIX 44, Rue François 1er, F-75008 Paris (FR)**

EP 0 158 552 B1

## Description

La présente invention concerne les servomoteurs à dépression d'assistance au freinage, plus particulièrement pour véhicules automobiles, du type comprenant un boîtier constitué d'une coquille avant et d'une coquille arrière et divisé intérieurement en une chambre à dépression et une chambre de travail par une structure de piston sollicitée par un ressort vers la coquille arrière et comprenant un moyeu renfermant un moyen de valve de distribution comportant un premier siège de clapet formé par le moyeu, un second siège de clapet, coaxial au siège de clapet fixe et formé par l'extrémité d'un plongeur coulissant dans le moyeu et relié à une tige d'actionnement de servomoteur, et un moyen de clapet monté dans le moyeu et sollicité élastiquement vers les premier et second sièges de clapet pour coopérer avec ces derniers, un ressort de rappel de tige, coaxial à la tige et disposé entre le moyeu et un organe d'appui monté sur la tige, et des moyens pour limiter le déplacement en retrait de l'organe d'appui lors du retour du servomoteur vers sa position de repos.

Un servomoteur de ce type est décrit dans le document US-A-4 358 990 (correspondant au GB-A-2032549). Dans ce document, la position de repos de la structure de piston est également déterminée par sa venue en butée contre la coquille arrière, la position de repos de la tige d'entrée (et, partant, du plongeur de valve et de l'organe d'appui qui lui sont associés) étant déterminée par une butée fixée sur la tige d'actionnement et coopérant avec un prolongement arrière de la coquille arrière, ladite butée étant indépendante de l'organe d'appui pour le ressort de rappel de tige, cet organe d'appui étant lui-même immobilisé sur la tige. De ce fait, pour permettre un réglage de la course morte du servomoteur, il est nécessaire de prévoir des moyens de réglage de la butée sur la tige qui obèrent notablement les coûts de production et de montage en série.

La présente invention a pour objet de proposer un servomoteur du type sus-mentionné, de structure simplifiée, de faibles coûts de fabrication et de montage, présentant une course morte nulle, dans lequel la structure de piston et le plongeur de valve adoptent automatiquement des positions de repos relatives autoadaptives assurant cette course morte nulle.

Pour ce faire, selon l'invention, l'organe d'appui est monté coulissant sur la tige et comporte, à l'opposé du ressort de rappel, une première et une seconde surfaces d'appui décalées l'une de l'autre et destinées à coopérer respectivement avec une première butée formée sur la tige, et, dans la position de repos du servomoteur, avec une seconde butée ayant une position de référence fixe au moins dans ladite position de repos du servomoteur.

Selon une caractéristique plus particulière de l'invention, la seconde butée est formée avantageusement par un organe de butée associé au boîtier, l'organe de butée étant typiquement tubulaire et s'étendant concentriquement autour de la partie arrière du moyeu de la structure de piston, la seconde butée, coopérant avec la seconde surface d'appui de l'organe d'appui monté coulissant sur la tige, étant formée par une extrémité rabattue vers la tige de l'organe de butée.

Avec un tel agencement, les positions de repos relatives de la structure de piston et du plongeur de valve sont obtenues automatiquement par appui des premier et second sièges de clapets sur le moyen de clapet sous l'effet de la légère différentielle de vide règnant, en condition de fonctionnement du servomoteur, dans les deux chambres du boîtier lorsque celui-ci est raccordé à une source vide, et du ressort de rappel de tige prenant appui, par l'intermédiaire de l'organe d'appui coulissant, sur la seconde butée avec laquelle n'interfèrent en butée ni la structure de piston ni la tige d'actionnement, l'élasticité du ressort de rappel de la tige autorisant ainsi une plage d'autoadaptation éliminant tous les moyens de réglage particuliers obérant les coûts de fabrication et de montage.

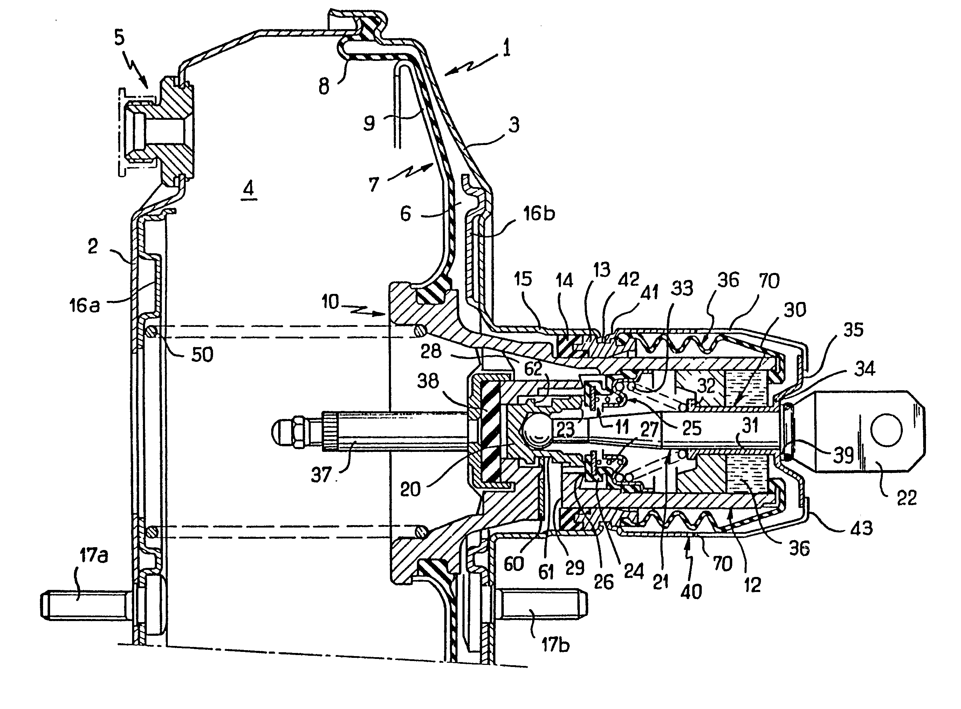

D'autres caractéristiques et avantages de la présente invention ressortiront de la description suivante d'un mode de réalisation, donné à titre illustratif mais nullement limitatif, faite en relation avec le dessin annexé, sur lequel:

- la figure unique est une vue en coupe longitudinale partielle d'un servomoteur d'assistance au freinage selon l'invention.

Le servomoteur d'assistance au freinage selon l'invention comprend typiquement un boîtier, désigné généralement par la référence 1, constitué par l'assemblage périphérique étanche d'une coquille de boîtier avant 2 et d'une coquille de boîtier arrière 3. Le boîtier 1 est divisé intérieurement en une chambre avant ou chambre à dépression 4, destinée à être reliée, par un raccord 5 monté dans la coquille avant 2, à une source de vide, par exemple le collecteur d'admission du moteur d'un véhicule automobile, et une chambre arrière ou chambre de travail 6 par une structure de piston, désignée généralement par la référence 7, constituée de façon classique d'un ensemble annulaire d'un diaphragme 8 et d'une plaque renfort 9, monté sur un moyeu 10 renfermant un moyen de valve de distribution 11, comme on le verra plus avant. Dans le mode de réalisation représenté, le moyeu 10 comporte une partie arrière de diamètre réduit 12 de configuration tubulaire guidée à coulissement étanche par rapport à la coquille arrière 3 du boîtier 1 par un ensemble annulaire de guidage et d'étanchéité, constitué d'un guide 13 et d'un joint coulissant 14, monté dans un prolongement arrière tubulaire ou cheminée 15 de la coquille arrière 3. Le boîtier 1 comporte un renfort annulaire antérieur 16a et un renfort annulaire postérieur 16b fixés respectivement sur les faces frontales de la coquille avant 2 et de la coquille arrière 3 et portant les vis de fixation 17a et 17b servant respectivement au montage d'un maître-cylindre (non représenté) sur la coquille avant 2 et au montage de l'ensemble maître-cylindre/servomoteur sur une paroi fixe d'un véhicule (non représentée).

Dans un logement central de la partie centrale du moyeu 10 de la structure de piston 7 est monté coulissant un plongeur de valve 20 solidarisé à une rotule d'extrémité d'une tige d'actionnement 21 comportant, à son autre extrémité, une chape 22 destinée à sa connexion articulée à une pédale de frein du véhicule automobile (non représentée). Le plongeur 20 forme à son extrémité arrière un siège de clapet mobile annulaire 23 destiné à coopérer avec la face avant renforcée d'un moyen de clapet tubulaire 24 réalisé en matériau élastomère et monté contre un épaulement interne de la partie arrière de moyeu 12 par une plaque support tubulaire 25 présentant une section sensiblement en forme de Z ou de L. La partie centrale du moyeu 10 définit d'autre part un siège de clapet fixe annulaire 26 disposé concentriquement autour du plongeur 20 et destiné à coopérer également, sélectivement, avec la face avant du moyen de clapet 24. Cette face avant du moyen de clapet 24 est sollicitée dans la direction vers les sièges de clapets fixe 26 et mobile 23 par un ressort de valve 27 prenant appui sur l'extrémité intérieure de la plaque support tubulaire 25. Des passages longitudinaux 28 et un passage radial 29 sont formés dans le moyeu 10 pour mettre en communication le moyen de valve 11 respectivement avec la chambre à dépression 4 et la chambre de travail 6.

Conformément à l'invention, sur la tige d'actionnement 21 est montée à coulissement une collerette, désignée généralement par la référence 30, comportant un fût tubulaire 31 engagé sur une partie cylindrique de la tige 21 et comportant une bride d'extrémité avant 32 formant surface d'appui pour un ressort hélicoïdal tronconique de rappel de tige 33 prenant appui, par son autre extrémité, contre la partie médiane de la plaque support tubulaire 25. A son extrémité opposée à la bride 32, la collerette 30 comporte une seconde partie de bride s'étendant radialement vers l'extérieur 34 prolongée axialement vers l'extérieur par une partie tronconique se terminant elle-même par une bride d'extrémité annulaire s'étendant radialement vers l'extérieur 35 décalée axialement de la bride intérieure 34. Dans la partie arrière de moyeu 12 est disposé, autour de la tige 21 (en l'occurence, autour de la collerette 30), un ensemble annulaire de filtrage 36 débarrassant de ses impuretés l'air atmosphérique pénétrant, par l'intérieur de la partie arrière de moyeu 12, jusqu'au moyen de valve 11 et de là, sélectivement, lors d'une phase de freinage, dans la chambre de travail arrière 6 du servomoteur.

Selon un aspect de l'invention, un organe de butée tubulaire 40, solidarisé au boîtier 1, est disposé autour de la partie arrière de moyeu 12 s'étendant hors de la coquille arrière 3 pour coopérer en appui avec la face arrière de la bride d'extrémité 35 de la collerette 30. Dans le mode de réalisation représenté, l'organe de butée tubulaire 40 est serti, par son extrémité avant 41, dans une gorge périphérique 42 du guide 13 et comporte, à son extrémité opposée (c'est-à-dire arrière), une bride annulaire rabattue radialement vers l'intérieur 43 formant surface de butée pour la bride d'extrémité 35 de la collerette 30. Comme représenté sur le dessin, un soufflet de protection 36 est disposé dans l'espace annulaire entre l'organe de butée tubulaire 40 et la partie arrière de moyeu 12, le soufflet 36 ayant son extrémité avant engagée sur le guide 13 et son extrémité arrière engagée à l'intérieur de l'extrémité arrière de le partie arrière de moyeu 12. Le servomoteur est complété par une tige de sortie 37 montée sur la partie centrale du moyeu 10 et destinée à coopérer avec le piston primaire du maître-cylindre sus-mentionné, un organe de réaction annulaire en matériau élastomère 38 étant interposé entre la tige de sortie 37 et le plongeur de valve 20. La tige d'actionnement 21 comporte de plus, avantageusement au niveau de son raccordement avec la chape 22, un bourrelet faisant saillie extérieurement 39 destiné à coopérer avec la bride d'extrémité 34 de la collerette 30 et à déplacer cette dernière en même temps que la tige 21 lors d'une opération de freinage pour accompagner le déplacement de la structure de piston 7 à l'encontre de son ressort de rappel 50 disposé entre le renfort antérieur 16a et le moyeu 10.

En fabrication, les éléments constitutifs du servomoteur sont dimensionnés de façon que ceux-ci adoptent sensiblement la position représentée sur la figure unique, c'est-à-dire, sous l'effet du ressort de rappel de piston 50, la structure de piston 7 à légère distance de la coquille arrière 3 avec la collerette 30 en butée par sa bride d'extrémité 35 contre la bride 43 de l'organe de butée 40 et sa bride intérieure 34 en contact avec le bourrelet 39 de la tige 21, les deux sièges de clapets fixe 26 et mobile 23 étant, dans ces conditions, coplanaires, tous deux en appui étanche contre la face avant du moyen de clapet 24. Lorsque le servomoteur est connecté in situ à une source de vide, la dépression créée dans la chambre de dépression 4 tend, dans un premier temps, à déplacer légèrement la structure de piston 7 vers l'avant et donc à dégager le siège de clapet fixe 26 de la face avant du moyen de clapet 24 (le siège de clapet mobile 23 demeurant plaqué contre la face avant du moyen de clapet 24 sous l'effet du ressort de rappel 33 et de l'appui entre la bride intérieure 34 et le bourrelet 39 de la tige 21). Ce faisant, le jeu ainsi créé entre le siège de clapet fixe 26 et le moyen de clapet 24 établit une communication, par le passage 29, entre la chambre à dépression 4 et la chambre de travail 6, amenant celle-ci à un niveau de dépressurisation voisin, par limite inférieure, de celui régnant dans la chambre à dépression 4 et permettant donc au ressort de rappel de piston 50 de ramener la structure de piston 7 sensiblement dans la position occupée précédemment, c'est-à-dire avec le siège de clapet fixe 26 de nouveau en appui sur le moyen de clapet 24. On conçoit que, du fait du montage flottant de la tige 21 (et du plongeur 20) par rapport à la collerette 30, cette dernière ne se trouve de fait pas assujettie au positionnement in situ de la tige 21 et que la structure de piston 7 peut recouvrer la configuration de repos à course nulle suivant la procédure sus-mentionnée indépendamment, dans une large mesure, des tolérances respectives du moyeu 10 et du boîtier 1.

Le fonctionnement en phase de freinage est conventionnel: lorsque la tige 21 est déplacée vers la gauche (sur le dessin) à partir de la position de repos (où les deux chambres 4 et 6 sont sensiblement au même niveau de dépression), le siège de clapet mobile 23 s'écarte de la face avant du moyen de clapet 24, qui demeure plaqué contre le siège de clapet fixe 26, permettant ainsi à l'air atmosphérique traversant l'ensemble de filtrage 36 de pénétrer dans la chambre de travail 6 par le passage 29 en créant ainsi, de part et d'autre de la structure de piston 7, une différentielle de pression d'assistance déplaçant cette structure de piston 7 dans le sens d'actionnement de la tige 21. Lorsque l'effort d'actionnement sur la tige 21 cesse, celle-ci, sous l'effet du ressort de rappel 33 (et du ressort de rappel de la pédale), est ramenée vers l'arrière. Ce faisant, le siège de clapet mobile 23 comprime fortement vers l'arrière le moyen de clapet 24 à l'encontre de son ressort de valve 25, dégageant ainsi largement le moyen de clapet 24 du siège de clapet fixe 26 et permettant la dépressurisation rapide de la chambre de travail 6 de sorte que, sous l'effet du ressort de rappel de piston 50, la structure de piston 7 revient également rapidement vers sa position de repos au voisinage de la coquille arrière 3. A la fin de ce mouvement de retour, la collerette 30 revient porter, par sa bride d'extrémité 35, contre la bride de butée 43 de l'organe de butée 40, pour repositionner, par l'intermédiaire du ressort de rappel 33, la structure de piston 7 dans sa configuration de repos avec le siège de clapet fixe 26 en appui contre la face avant du moyen de clapet 24 dans un plan déterminé par le siège de clapet mobile 23 dans la position de repos du plongeur 20.

Pour permettre au servomoteur de se conformer aux essais dits d'arrachement constituant à exercer sur la tige 21 un effort de traction (vers la droite, sur le dessin), on prévoit une clé 60 en forme de U engagée fermement dans l'extrémité avant du passage 29 suivant un agencement faisant l'objet du document EP-A-0 101 658, l'extrémité découpée en forme de U de la clé 60 étant reçue avec jeu dans une gorge périphérique 61 du plongeur 20 limitée vers l'avant par un épaulement annulaire 62. Avec un tel agencement, lorsque l'effort de traction important sus-mentionné est exercé sur la tige 21, le plongeur 20 vient en appui par son épaulement annulaire 62 contre la clé 60, l'effort de traction 21 étant ainsi transmis par cette dernière à la structure de piston 7 pour venir porter cette dernière en appui contre le renfort postérieur 16b. On notera que, comme représenté sur le dessin, afin de permettre au plongeur 20 de réaliser, lors d'une phase de cessation de freinage, la sur-ouverture entre le moyen de clapet 24 et le siège de clapet fixe 26, la gorge 61 est axialement dimensionnée de façon que, dans la configuration de repos représentée sur le dessin, un jeu important soit ménagé entre la clé 60 et l'épaulement 62.

Pour les cas où, en configuration de repos, in situ dans le véhicule automobile, la pédale reliée à la chape 22 se trouve au voisinage immédiat de l'extrémité arrière de la partie arrière de moyeu 12, on prévoit, dans la partie arrière de l'organe de butée tubulaire 40, une fente diamétrale s'étendant axialement 70 susceptible de recevoir l'âme ou la tranche de la pédale lors du plein enfoncement de cette dernière.

## Revendications

1. Servomoteur à dépression d'assistance au freinage, comprenant: un boîtier (1) constitué d'une coquille avant (2) et d'une coquille arrière (3) et divisé intérieurement en une chambre à dépression (4) et une chambre de travail (6) par une structure de piston (7) sollicitée par un ressort (50) vers la coquille arrière (3) et comprenant un moyeu (10) renfermant un moyen de valve de distribution (11) comportant un premier siège de clapet (26) formé par le moyeu (10), un second siège de clapet (23), coaxial au premier siège de clapet (26) et formé par l'extrémité d'un plongeur (20) coulissant dans le moyeu (10) et relié à une tige d'actionnement (21) du servomoteur, et un moyen de clapet (24) monté dans le moyeu (10,12) et sollicité élastiquement (27) vers les premier (26) et second (27) sièges de clapets pour coopérer avec ces derniers, un ressort de rappel de tige (33) coaxial à la tige (21) et disposé entre le moyeu (10,12) et un organe d'appui (30) monté sur la tige (21), et des moyens (34,39;35,43) pour limiter le déplacement en retrait de l'organe d'appui (30) lors du retour du servomoteur vers sa position de repos, caractérisé en ce que l'organe d'appui (30) est monté coulissant sur la tige (21) et comporte, à l'opposé du ressort de rappel (33), une première (34) et une seconde (35) surfaces d'appui décalées l'une de l'autre et destinées à coopérer respectivement avec une première butée (39) formée sur la tige et, dans la position de repos du servomoteur, avec une seconde butée (43) ayant une position de référence fixe au moins dans ladite position de repos du servomoteur.

2. Servomoteur selon la revendication 1, caractérisé en ce que la seconde butée (43) est formée par un organe de butée (40) associé au boîtier (1).

3. Servomoteur selon la revendication 2, caractérisé en ce que la seconde butée est formée par une extrémité rabattue vers la tige (43) de l'organe de butée (40).

4. Servomoteur selon la revendication 2 ou la revendication 3, dans lequel une partie arrière (12) du moyeu (10) est guidée à coulissement étanche dans un prolongement tubulaire central (15) de la coquille arrière (3), caractérisé en ce que l'organe de butée (40) est tubulaire et s'étend concentriquement autour de la partie arrière (12) du moyeu (10).

5. Servomoteur selon la revendication 4, caractérisé en ce que l'organe d'appui (30) comprend une partie de fût (31) engagée sur la tige (21) et formant une première zone d'extrémité (32) coopérant avec le ressort de rappel (33), et une seconde zone d'extrémité formant centralement la première surface d'appui (34) et se prolongeant en s'évasant sensiblement radialement vers l'extérieur pour constituer la seconde surface d'appui (35).

6. Servomoteur selon la revendication 4 ou la revendication 5, dans lequel la partie arrière (12) du moyeu (10) est guidée à coulissement par un ensemble annulaire de guidage (13) et d'étanchéité (14) monté dans le prolongement tubulaire (15) de la coquille arrière (3), caractérisé en ce que l'organe de butée tubulaire (40) est monté par son extrémité (41) opposée à l'extrémité rabattue (43) sur l'ensemble annulaire de guidage et d'étanchéité (13, 14).

7. Servomoteur selon l'une des revendications 4 à 6, caractérisé en ce qu'il comprend un soufflet d'étanchéité (36) relié à l'extrémité extérieure de la partie arrière (12) du moyeu (10) et disposé entre cette dernière et l'organe de butée tubulaire (40).

8. Servomoteur selon l'une des revendications 4 à 7, caractérisé en ce que l'organe de butée tubulaire (40) est formé, sur sa partie arrière, avec une fente diamétrale s'étendant axialement (70).

9. Servomoteur selon l'une des revendications précédentes, caractérisé en ce que la butée formée sur la tige (21) est constituée par un bourrelet (39).

10. Servomoteur selon l'une des revendications précédentes, caractérisé en ce qu'il comporte une clé de retenue ayant une extrémité reçue dans une zone centrale de diamètre réduit (61) du plongeur (20) et s'étendant dans une lumière radiale (29) du moyeu (20) faisant communiquer le moyen de valve (11) avec la chambre arrière (6).

**Patentansprüche**

1. Unterdruck-Servomotor zur Bremsverstärkung mit einem Gehäuse (1), das von einer vorderen Gehäuseschale (2) und einer hinteren Gehäuseschale (3) gebildet wird und im Inneren in eine Unterdruckkammer (4) und eine Arbeitskammer (6) unterteilt ist, und zwar durch eine Kolbenanordnung (7), die von einer Feder (50) in Richtung auf die hintere Gehäuseschale (3) vorgespannt wird und eine Nabe (10) aufweist, welche eine Verteilerventileinrichtung (11) umgibt, wobei die Verteilerventileinrichtung versehen ist mit einem von der Nabe (10) gebildeten ersten Ventilsitz (26), einem zum ersten Ventilsitz (26) koaxialen zweiten Ventilsitz (23), der von dem Ende eines Plungers gebildet wird, welcher in der Nabe (10) gleitet und mit einer Betätigungsstange (21) des Servomotors verbunden ist, und einem Ventilkörper (24), der in der Nabe (10,12) angebracht ist und in Richtung auf den ersten (26) und zweiten (27) Ventilsitz elastisch (27) vorgespannt wird, um mit den letzteren zusammenzuwirken, mit einer Stangen-Rückholfeder (33), die koaxial zur Stange (21) sowie zwischen der Nabe (10,12) und einem an der Stange (21) angebrachten Anlagekörper (30) angeordnet ist, und mit Mitteln (34,39;35,43) zum Begrenzen der Rückhubverschiebung des Anlagekörpers (30) bei einer Rückkehr des Servomotors in seine Ruhestellung, dadurch gekennzeichnet, daß der Anlagekörper (30) auf der Stange (21) gleitend gelagert ist und gegenüber der Rückholfeder (33) eine erste (34) und eine zweite (35) Anlagefläche aufweist, die gegeneinander versetzt sind und mit einem an der Stange gebildeten ersten Anschlag (39) bzw. in der Ruhestellung des Servomotors mit einem zweiten Anschlag (43) zusammenwirken, welcher eine festgelegte Bezugslage zumindest in der Ruhestellung des Servomotors besitzt.

2. Servomotor nach Anspruch 1, dadurch gekennzeichnet, daß der zweite Anschlag (43) von einem dem Gehäuse (1) zugeordneten Anschlagteil (40) gebildet wird.

3. Servomotor nach Anspruch 2, dadurch gekennzeichnet, daß der zweite Anschlag von einem zur Stange (43) umgeschlagenen Ende des Anschlagteils (40) gebildet wird.

4. Servomotor nach Anspruch 2 oder 3, bei dem ein hinterer Abschnitt (12) der Nabe (10) gleitend und abgedichtet in einer zentralen rohrförmigen Verlängerung der hinteren Gehäuseschale (3) geführt ist, dadurch gekennzeichnet, daß das Anschlagteil (40) rohrförmig ist und konzentrisch um den hinteren Abschnitt (12) der Nabe (10) verläuft.

5. Servomotor nach Anspruch 4, dadurch gekennzeichnet, daß der Anlagekörper (30) einen Schaftabschnitt (31) aufweist, der auf der Stange (21) sitzt und einen ersten Endbereich (32) sowie einen zweiten Endbereich bildet, von denen der erste Endbereich mit der Rückholfeder (33) zusammenwirkt und der zweite Endbereich zentral die erste Anlagefläche (34) bildet und sich im wesentlich radial nach außen divergierend fortsetzt, um die zweite Anlagefläche (35) zu bilden.

6. Servomotor nach Anspruch 4 oder 5, bei dem der hintere Abschitt (12) der Nabe (10) gleitend geführt ist von einer ringförmigen Führungs(13)-und Abdichtungs(14)-Anordnung, die in der rohrförmigen Verlängerung (15) der hinteren Gehäuseschale (3) angebracht ist, dadurch gekennzeichnet, daß das rohrförmige Anschlagteil (40) mit seinem dem umgebogenen Ende (43) abgewandten Ende (41) auf der ringförmigen Führungs- und Abdichtungsanordnung (13,14) angebracht ist.

7. Servomotor nach einem der Ansprüche 4-6, dadurch gekennzeichnet, daß er einen Abdichtungsbalg (36) aufweist, der mit dem äußeren Ende des hinteren Abschnittes (12) verbunden sowie zwischen dem letzteren und dem rohrförmigen Anschlagteil (40) angeordnet ist.

8. Servomotor nach einem der Ansprüche 4-7, dadurch gekennzeichnet, daß das rohrförmige Anschlagteil (40) an seinem hinteren Abschnitt mit einem axial verlaufenden diametralen Schlitz (70) versehen ist.

9. Servomotor nach einem der vorhergehenden Ansprüche, dadurch gekennzeichnet, daß der an der Stange (21) gebildete Anschlag von einem O-Ring (39) gebildet wird.

10. Servomotor nach einem der vorhergehenden Ansprüche, dadurch gekennzeichnet, daß er einen Haltekeil aufweist, der mit einem Ende in einem durchmesserverringerten zentralen Bereich (61) des Kolbens (20) sitzt und sich in eine radiale Nut (29) der Nabe (20) erstreckt, welche den Ventilkörper (11) mit der hinteren Kammer (6) verbindet.

## Claims

1. Brake assistance vacuum servo motor comprising: a casing (1) comprised of a front shell (2) and a rear shell (3) and internally divided into a vacuum chamber (4) and a work chamber (6) by a piston structure (7) biased towards the rear shell (3) by a spring (50) and comprising a hub (10) enclosing a distribution valve means (11) comprising a first valve seat (26) formed by the hub (10), a second valve seat (23) coaxial to the first valve seat (26) and formed by the extremity of a plunger (20) sliding in the hub (10) and connected to an actuating rod (21) of the servo motor, and a valve means (24) mounted in the hub (10,12) and resiliently (27) biased towards the first (26) and second (27) valve seats for cooperating with the latter, a rod return spring (33) coaxial to the rod (21) and disposed between the hub (10,12) and an engagement member (30) mounted on the rod (21), and means (34,39;35,43) for limiting the return displacement of the engagement member (30) when the servomotor returns towards its rest position, characterized in that the engagement member (30) is slidingly mounted on the rod (21) and comprises, opposite to the return spring (33), first (34) and second (35) engagement surfaces offset relative to each other and adapted to cooperate, respectively, with a first abutment (39) formed on the rod and, when the servo motor is in its rest position, with a second abutment (43) having a fixed reference position at least in the rest position of the servo motor.

2. Servo motor according to claim 1, characterized in that the second abutment (43) is formed by an abutment member (40) associated to the casing (1).

3. Servo motor according to claim 2, characterized in that the second abutment is formed by an extremity of the abutment member (40) rebent towards the rod (43).

4. Servo motor according to claim 2 or claim 3 wherein a rear portion (12) of the hub (10) is slidingly and sealingly guided in a central tubular extension (15) of the rear shell (3), characterized in that the abutment member (40) is tubular and extends concentrically about the rear portion (12) of the hub (10).

5. Servo motor according to claim 4, characterized in that the engagement member (30) comprises a stem portion (31) engaged on the rod (21) and forming a first end zone (32) cooperating with the return spring (33), and a second end zone forming centrally the first engagement surface (34) and being prolongated by flaring substantially radially outwards for constituting the second engagement surface (35).

6. Servo motor according to claim 4 or claim 5, wherein the rear portion (12) of the hub (10) is slidingly guide by an annular guiding (13) and sealing (14) assembly mounted in the tubular extension (15) of the rear shell (3), characterized in that the tubular abutment member (40) is mounted on the annular guiding and sealing assembly (13,14) by its extremity (41) opposite to the rebent extremity (43).

7. Servo motor according to any of claims 4 to 6, characterized in that it comprises a sealing bellows (36) connected to the external extremity of the rear portion (12) of the hub (10) and disposed between the latter and the tubular abutment member (40).

8. Servo motor according to any of claims 4 to 7, characterized in that the tubular abutment member (40) is provided with an axially extending diametric slot (70) on its rear portion.

9. Servo motor according to any of the preceding claims, characterized in that the abutment formed on the rod (21) is constituted by an O-ring (39).

10. Servo motor according to any of the preceding claims, characterized in that it comprises a retaining key having one end received in a central zone (61) of reduced diameter of the plunger (20) and extending into a radial opening (29) of the hub (10) communicating the valve means (11) with the rear chamber (6).

0 158 552